(19) Europäisches Patentamt
European Patent Office
Office européen des brevets

(11) EP 0 613 920 B1

(12) EUROPÄISCHE PATENTSCHRIFT

(45) Veröffentlichungstag und Bekanntmachung des Hinweises auf die Patenterteilung:
**20.05.1998 Patentblatt 1998/21**

(51) Int Cl.⁶: **C08G 73/12**, C08G 69/10

(21) Anmeldenummer: **94102420.0**

(22) Anmeldetag: **17.02.1994**

(54) **Verfahren zur Herstellung von Polyasparaginsäure**

Process for preparing polyaspartic acid

Procédé de préparation de l'acide polyaspartique

(84) Benannte Vertragsstaaten:
**BE DE ES FR GB IT NL**

(30) Priorität: **02.03.1993 DE 4306412**

(43) Veröffentlichungstag der Anmeldung:
**07.09.1994 Patentblatt 1994/36**

(73) Patentinhaber: **BAYER AG**
**51368 Leverkusen (DE)**

(72) Erfinder:
- **Groth, Torsten, Dr.**
  **D-51061 Köln (DE)**
- **Joentgen, Winfried, Dr.**
  **D-50769 Köln (DE)**
- **Müller, Nikolaus, Dr.**
  **D-40789 Monheim (DE)**

(56) Entgegenhaltungen:
**EP-A- 0 256 366**
**WO-A-92/14753**
**WO-A-93/23452**
**DE-A- 2 253 190**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 613 920 B1

## Beschreibung

Die Erfindung betrifft ein Verfahren zur Herstellung von Polysuccinimid (PSI) und Polyasparaginsäure (PAS), ihrer Salze und ihres Amides durch Polymerisation von Asparaginsäure, Maleinsäureanhydrid, Maleinsäure oder Fumarsäure in einem Lösungsmittel bei 150°C bis 300°C, gegebenenfalls in Anwesenheit von Ammoniak.

Die Herstellung und Verwendung von Polyasparaginsäure (PAS) und ihrer Derivate ist seit langem Gegenstand zahlreicher Publikationen und Patente. So kann die Herstellung durch thermische Polykondensation von Asparaginsäure erfolgen (J.Org. Chem. 26, 1084 (1961)). US-A 4839461 (= EP-A 0256366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt. Das Monoammoniumsalz wird in der Schmelze bei Temperaturen von 125°C bis 140°C zu Polysuccinimid polymerisiert und durch Hydrolyse in PAS oder ein Salz davon überführt Aus US-A 4590 260 (= JP-A 1984(59)-60160) ist bekannt, Aminosäuren zusammen mit Derivaten der Äpfel-, Malein- und/oder Fumarsäure bei 100°C bis 225°C einer Polykondensation zu unterwerfen. Gemäß US-A 4 696 981 werden bei derartigen Reaktionen Mikrowellen eingesetzt

In DE-A 2 253 190 (= US-A 3 846 380) wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid) durch thermische Polymerisation zur Herstellung der Zwischenstufe Polysuccinimid, das seinerseits in geeigneten Lösungsmitteln mit Aminen zu den gewünschten Derivaten umgesetzt werden kann, verwendet.

Polyasparaginsäure läßt sich gemäß EP-A 256 366 (US-A-4 839 461) und US-A 5 116 513 zur Entfernung von Verkrustungen durch Härtebildner des Wassers (Scale Inhibition und Scale Deposition Removal) einsetzen. Polyasparaginsäure und ihre Salze sind wirksame Bestandteile von Waschmitteln und Düngemitteln, s. US-A-4 839 461 und EP-A454 126.

Aus DE-A 2 029 502 ist bereits ein Verfahren zur Herstellung von Asparaginsäure durch Umlagerung des Diammoniumsalzes der Maleinsäure bekannt, bei dem eine wäßrige Lösung des Diammoniumsalzes unter Druck auf Temperaturen von 110°C bis 145°C erhitzt wird. Ein weiteres Verfahren zur Herstellung von Asparaginsäure in wäßriger Lösung wird in DD 126 075 beschrieben. Die Herstellung von Polyasparaginsäure wird in DE-A 2 029 502 und DD 126 075 aber nicht angegeben.

Die Erfindung betrifft ein Verfahren zur Herstellung von Polysuccinimid und Polyasparaginsäure, ihren Salzen und ihrem Amid, dadurch gekennzeichnet, daß man Asparaginsäure, Maleinsäureanhydrid, Maleinsäure oder Fumarsäure in einem Lösungsmittel bei 150°C bis 300°C behandelt, gegebenenfalls in Anwesenheit von Ammoniak, wobei in einer bevorzugten Ausführungsform die Verweilzeit hierbei 5 bis 300 Minuten beträgt und das erhaltene Polysuccinimid gegebenenfalls durch Hydrolyse in Polyasparaginsäure überführt, wobei als Lösungsmittel Wasser, ein Alkohol oder ein organisches, polares, aprotisches Lösungsmittel verwendet wird.

Unter Polyasparaginsäure werden in der vorliegenden Erfindung sowohl die freie Polyasparaginsäure als auch ihre Salze verstanden.

Die Reaktion kann als Batchprozeß oder kontinuierlich durchgeführt werden. Als Lösungsmittel können organische Lösungsmittel oder Wasser verwendet werden. Wird Wasser als Lösungsmittel verwendet, so kann das Reaktionsgemisch im gleichen Lösungsmittel mit einer Base zum entsprechenden Salz umgesetzt werden. Weitere geeignete Lösungsmittel sind Alkohole, insbesondere tertiäre $C_4$-$C_8$-Alkohole, vor allem aber organische polar aprotische Lösungsmittel wie z.B. Dimethylformamid, und N-Methylpyrrolidon.

Die Erfindung betrifft weiterhin ein Verfahren zur Herstellung von Polyasparaginsäure und ihrer Salze.

Die Polymerisationsprodukte können durch Lösen in einer Base bei 20 bis 95°C, bevorzugt 40 bis 70°C, besonders bevorzugt 50 bis 70°C in das entsprechende Polyasparaginsäuresalz überführt werden. Als Basen können beispielsweise Alkali- und Erdalkalimetallhydroxide oder Carbonate, insbesondere NaOH, KOH, LiOH verwendet werden. Die Konzentration der verwendeten Base ist nicht kritisch, sie beträgt vorzugsweise 5 bis 50 Gew.-% in Form von wäßrigen Lösungen. Es ist auch möglich, durch Hydrolyse in Wasser bei 80°C bis 100°C oder durch Behandlung des Salzes mit Säuren oder sauren Ionenaustauschern bereits an dieser Stelle die freie Polyasparaginsäure zu erhalten.

Das erfindungsgemäß hergestellte Polysuccinimid enthält in einer bevorzugten Ausführungsform im wesentlichen wiederkehrende Succinimid-Einheiten folgender Struktur:

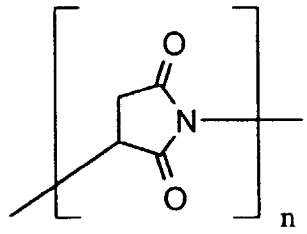

Zusätzlich können durch geeignete Reaktionsführung und Wahl der Edukte weitere wiederkehrende Einheiten enthalten sein, z.B.

a.) Asparaginsäure-Einheiten der Formel

β-Form

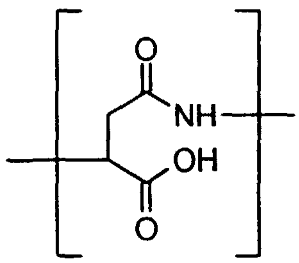

und

α-Form

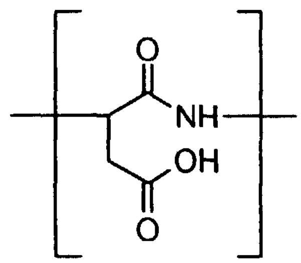

b.) Apfelsäure-Einheiten der Formel

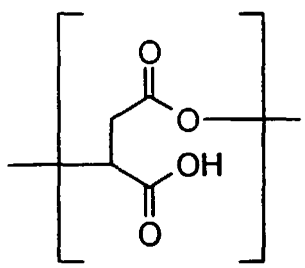

und

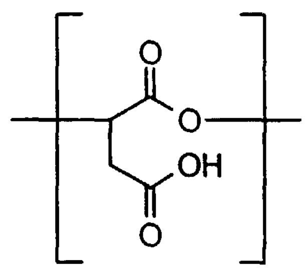

c.) Maleinsäure- und Fumarsäure-Einheiten der Formel

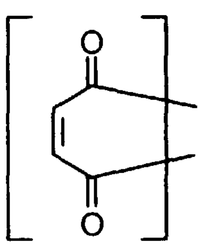

und

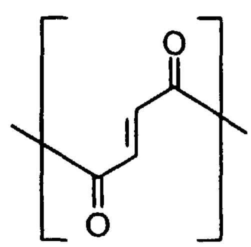

Die erfindungsgemäß hergestellte Polyasparaginsäure enthält in einer bevorzugten Ausführungsform im wesentlichen die unter a) angegebenen α- und β-Einheiten. Im allgemeinen liegt hierbei zu wenigstens 50 %, insbesondere zu wenigstens 70 % die β-Form vor.

Zusätzlich zu den wiederkehrenden Polyasparaginsäureeinheiten können z.B. die unter b) und c) wiederkehrenden Einheiten enthalten sein.

Die wiederkehrenden Einheiten b) und c) sind vorzugsweise in einer Menge von 1:1 bis 1:100 bezogen auf die Summe von a) enthalten. Im einzelnen sind vorzugsweise folgende Gewichtsmengen der wiederkehrenden Einheiten enthalten:

a): 50 bis 99 Gew.-%
b): 1 bis 40 Gew.-%
c): 0 bis 10 Gew.-%

Die Analyse der chemischen Struktur erfolgt vorzugsweise mit $^{13}C$-NMR und Totalhydrolyse mit HPLC, GC und GC/MS.

In einer bevorzugten Ausführungsform wird die Reaktion in Wasser als Lösungsmittel durchgeführt. In einer besonders bevorzugten Ausführungsform werden die Edukte, insbesondere Maleinsäureanhydrid und Ammoniak in Wasser zur Reaktion gebracht. Die Umsetzung erfolgt bei einer Temperatur von 150°C bis 300°C, bevorzugt 180°C bis 250°C, besonders bevorzugt 180°C bis 220°C und einem molaren Verhältnis von Maleinsäureanhydrid bzw. Maleinsäure oder Fumarsäure zu $NH_3$ von 1:0.8 bis 1:1.2, bevorzugt 1:0.95 bis 1:1.05. Zur Herstellung des Amides der Polyasparaginsäure beträgt das molare Verhältnis von Substrat zu Ammoniak im Fall von Maleinsäureanhydrid, Maleinsäure oder Fumarsäure 1:1,8 bis 1:2,4 bevorzugt 1:1,9 bis 1:2,2 und im Falle von Asparaginsäure 1:0,8 bis 1:1,2 bevorzugt 1:0,95 bis 1:1.05. Bei Durchführung der Reaktion als kontinuierlicher Prozeß beträgt die Verweilzeit in Abhängigkeit von der Reaktionstemperatur 5 Min. bis 300 Min.. Eine andere Ausführungsform besteht darin, die Reaktion bei zwei Temperaturstufen durchzuführen. Hierbei werden z.B. Maleinsäureanhydrid und $NH_3$ bei 20°C bis 100°C, besonders 40°C bis 80°C umgesetzt und anschließend für 5 Min. bis 300 Min. auf 150°C bis 300°C erwärmt. Nach beendeter Reaktionszeit können im gleichen Reaktionsmedium durch Zusatz einer Base die entsprechenden PAS-Salze hergestellt werden. Das molare Verhältnis des Lösungsmittels Wasser zu z.B. Maleinsäureanhydrid ist so bemessen, daß während der ganzen Reaktion eine flüssige Reaktionslösung gewährleistet ist. Ein Teil des Wassers wird zu Beginn der Reaktion zugesetzt; ein weiterer Teil des Wassers wird nach beendeter Polymerisation und Abkühlung des Reaktionsgemisches auf 60°C bis 100°C entweder als reines Wasser oder bei Herstellung der PAS-Salze in Form einer wäßrigen Baselösung zugegeben.

Betrachtet man den eigentlichen Polymerisationsschritt, der bei erhöhter Temperatur ausgeführt wird, so sollte hier das molare Verhältnis von Maleinsäureanhydrid und Wasser 1:1-1:5 vorzugsweise 1:1,3-1:2,5 betragen.

Die Reaktion wird unter erhöhtem Druck durchgeführt. Hierbei kann ein Maximaldruck erreicht werden, der dem kritischen Druck des Ammoniaks (113 bar) entspricht. Bevorzugt wird die Reaktion jedoch bei einem Druck von 2-70bar, besonders bevorzugt bei 5-40 bar durchgeführt.

Ein Vorteil des erfindungsgemäßen Verfahrens ist die Umgehung der bei der in Substanz Polymerisation unvermeidlichen Zäh- und Festphasen, deren Beherrschung nur mit hohem technischen Aufwand möglich ist. Vorteilhaft ist weiterhin, daß das Verfahren ohne Zwischenisolierung durchgeführt werden kann.

Die nach diesem Verfahren hergestellten Salze (z.B. Na-Salz) weisen Eigenschaften eines Dispergier- und Sequestiermittels sowie eines Korrosionsinhibitors auf und können anwendungstechnisch entsprechend verwendet werden. Darüber hinaus kann eine antimikrobielle Wirksamkeit, d.h. gegen Bakterien und Pilze, nachgewiesen werden.

Das hergestellte Polymer zeigt in Abhängigkeit von den Reaktionsbedingungen z.B. Verweilzeit und Temperatur der thermischen Polymerisation unterschiedliche Kettenlängen bzw. Molekulargewichte nach Gelpermeationschromotographie-Analyse ($\overline{M}_w$ = 500 bis 1 000, bevorzugt 1 000 bis 5 000, besonders bevorzugt 2 000 bis 4 000).

Verwendung finden die erfindungsgemäßen Verbindungen insbesondere als Dispergiermittel, Waschmittelzusatz, Sequestiermittel, Scale Inhibitor, als Korrosionsinhibitor, vor allem für Messing und als Mikrobizid und in Düngemitteln.

## Beispiel 1

In einem Autoklav werden 245 g Maleinsäureanhydrid in 89 g Wasser vorgelegt und auf 60°C erwärmt. Nun werden 44,5 g $NH_3$ zugepumpt. Es wird anschließend innerhalb von 30Min. auf 200°C erhitzt und 30Min. bei dieser Temperatur nachgerührt. Nach dem Abkühlen auf 60°C werden 167 g (1,25 mol) 30%ige NaOH-Lösung zugegeben. Nach dem Abkühlen auf Raumtemperatur erhält man eine rote Lösung. Zur vollständigen Überführung ins Na-Salz wird die Lösung bei 60°C mit weiteren 140 g (1,05 mol) 30 %iger NaOH-Lösung umgesetzt. Das nach der Sprühtrocknung erhaltene Polyasparaginsäurenatriumsalz hat einen Asparaginsäuregehalt von 72 % (HPLC nach Totalhydrolyse) und zeigt gute Dispergier- und Sequestriereigenschaften.

## Beispiel 2

In einem Autoklav werden 245 g Maleinsäureanhydrid in 72 g Wasser vorgelegt und auf 80°C erwärmt. Nun werden 42,5 g $NH_3$ zugepumpt. Es wird anschließend innerhalb von 30 Min auf 170°C erhitzt und 120 Min. bei dieser Temperatur nachgerührt. Beim Abkühlen bleibt die Lösung bis ca. 60°C flüssig wird aber bei weiterer Abkühlung auf Raumtemperatur fest. Daher werden bei 80°C weitere 100 g Wasser zugegeben, um bei Raumtemperatur eine Lösung zu erhalten. Die auf diese Weise erhaltene Lösung eines Polysuccinimid-/Polyasparaginsäure-Gemisches zeigt nach Überführung ins Natriumsalz ebenfalls gute Dispergier- und Sequestriereigenschaften.

1. Sequestieren eines Tensides

Beurteilung der Trübungsintensität einer Alkylbenzolsulfonsäure-Na-Salz-Lösung in Leitungswasser.

1 ml 10 %ige Lösung eines Alkylbenzolsulfonate, werden unter Zugabe von 0,1 g sprühgetrocknetem PAS-Na-Salz gemäß Beispiel 1 bzw. 2 mit Leitungswasser (Gesamt Härtegrad 14,1) auf 100 ml aufgefüllt. Die entstandene Lösung hat eine Standstabilität von über 7 Tagen. Ohne Zusatz von PAS-Na-Salz trübt sich die Lösung in wenigen Minuten.

2. Dispergieren von Zinkoxid

0,3 PAS-Na-Salz gemäß Beispiel 1 oder 2 werden mit 10 g Zinkoxid in 200 ml Leitungswasser dispergiert. Die Dispersion wird in einen 250 ml Meßzylinder gegeben. Nach 3 h werden Proben aus unterschiedlichen Stellen des Meßzylinders entnommen und auf ihren Zinkoxidgehalt untersucht. Dabei stellte sich heraus, daß der Zinkoxidgehalt infolge der guten dispergierenden Wirkung immer gleich ist. Weiterhin wird die Sedimentationsstabilität nach 3 h und nach 24 h bestimmt. In beiden Fällen wird praktisch keine Sedimentationsschicht ab Boden des Meßzylinders festgestellt.

**Patentansprüche**

**1.** Verfahren zur Herstellung von Polysuccinimid und Polyasparaginsäure, ihren Salzen und ihrem Amid durch Polymerisation von Maleinsäureanhydrid, Asparaginsäure, Maleinsäure oder Fumarsäure in einem Lösungsmittel bei 150°C bis 300°C, gegebenenfalls in Anwesenheit von Ammoniak und gegebenenfalls Hydrolyse des erhaltenen Polysuccinimids zu Polyasparaginsäure oder einem Salz davon, dadurch gekennzeichnet, daß das Lösungsmittel Wasser, ein Alkohol oder ein organisches, polares, aprotisches Lösungsmittel ist.

**2.** Verfahren nach Anspruch 1, dadurch gekennzeichnet, daß die Polymerisation mit einer Verweilzeit von 5 bis 300 Minuten durchgeführt wird.

**3.** Verfahren nach wenigstens einem der vorhergehenden Ansprüche, dadurch gekennzeichnet, daß bei der Herstellung von Polyasparaginsäure das molare Verhältnis von Maleinsäureanhydrid, Maleinsäure oder Fumarsäure zu Ammoniak zwischen 1:0,8 und 1:1,2 liegt.

**4.** Verfahren nach wenigstens einem der vorhergehenden Ansprüche, dadurch gekennzeichnet, daß bei der Herstellung des Amides der Polyasparaginsäure das molare Verhältnis zu Ammoniak im Falle von Maleinsäureanhydrid, Maleinsäure oder Fumarsäure zwischen 1:1,8 und 1:2,4 und im Falle von Asparaginsäure zwischen 1:0,8 und 1: 1,2 liegt.

**5.** Verfahren nach wenigstens einem der vorhergehenden Ansprüche, dadurch gekennzeichnet, daß die Reaktion bei einem Druck von 2 bis 70 bar durchgeführt wird.

**6.** Verfahren nach wenigstens einem der vorhergehenden Ansprüche, dadurch gekennzeichnet, daß die Reaktion bei 180°C bis 220°C durchgeführt wird.

**7.** Verfahren nach wenigstens einem der vorhergehenden Ansprüche, dadurch gekennzeichnet, daß die Reaktion kontinuierlich durchgeführt wird.

**8.** Verfahren nach wenigstens einem der vorhergehenden Ansprüche, dadurch gekennzeichnet, daß Basen vor oder nach der Polymerisation zugesetzt werden.

**9.** Verfahren nach wenigstens einem der vorhergehenden Ansprüche, dadurch gekennzeichnet, daß als Lösungsmittel Wasser verwendet wird.

## Claims

1. Process for preparing polysuccinimide and polyaspartic acid, salts thereof and the amide thereof by polymerization of maleic anhydride, aspartic acid, maleic acid or fumaric acid at from 150°C to 300°C in a solvent, optionally in the presence of ammonia, and optional hydrolysis of the polysuccinimide obtained to polyaspartic acid or a salt thereof, characterized in that the solvent is water, an alcohol or an organic, polar, aprotic solvent.

2. Process according to Claim 1, characterized in that the polymerization is carried out with a residence time of from 5 to 300 minutes.

3. Process according to at least one of the preceding claims, characterized in that in the preparation of polyaspartic acid the molar ratio of maleic anhydride, maleic acid or fumaric acid to ammonia is between 1:0.8 and 1:1.2.

4. Process according to at least one of the preceding claims, characterized in that in the preparation of polyaspartamide the molar ratio to ammonia is, in the case of maleic anhydride, maleic acid or fumaric acid, between 1:1.8 and 1:2.4, and in the case of aspartic acid is between 1:0.8 and 1:1.2.

5. Process according to at least one of the preceding claims, characterized in that the reaction is carried out at a pressure from 2 to 70 bar.

6. Process according to at least one of the preceding claims, characterized in that the reaction is carried out at from 180°C to 220°C.

7. Process according to at least one of the preceding claims, characterized in that the reaction is carried out continuously.

8. Process according to at least one of the preceding claims, characterized in that bases are added prior to or after the polymerization.

9. Process according to at least one of the preceding claims, characterized in that the solvent used is water.

## Revendications

1. Procédé pour la préparation d'un polysuccinimide et d'un acide polyaspartique, des sels et de l'amide de ce dernier, par polymérisation de l'anhydride maléique, de l'acide aspartique, de l'acide maléique ou de l'acide fumarique dans un solvant à des températures de 150 à 300°C, éventuellement en présence d'ammoniac, avec le cas échéant hydrolyse du polysuccinimide obtenu en acide polyaspartique ou l'un de ses sels, caractérisé en ce que le solvant utilisé est l'eau, un alcool ou un solvant organique polaire aprotonique.

2. Procédé selon la revendication 1, caractérisé en ce que la polymérisation est exécutée en une durée de 5 à 300 min.

3. Procédé selon au moins une des revendications qui précèdent, caractérisé en ce que, à la préparation de l'acide polyaspartique, le rapport molaire entre l'anhydride maléique, l'acide maléique ou l'acide fumarique d'une part, l'ammoniac d'autre part, va de 1:0,8 à 1:1,2.

4. Procédé selon au moins une des revendications qui précèdent, caractérisé en ce que, à la préparation de l'amide de l'acide polyaspartique, le rapport molaire avec l'ammoniac va de 1:1,8 à 1:2,4 dans le cas de l'anhydride maléique, de l'acide maléique ou de l'acide fumarique, et de 1:0,8 à 1:1,2 dans le cas de l'acide aspartique.

5. Procédé selon au moins une des revendications qui précèdent, caractérisé en ce que la réaction est exécutée sous une pression de 2 à 70 bar.

6. Procédé selon au moins une des revendications qui précèdent, caractérisé en ce que la réaction est exécutée à des températures de 180 à 220°C.

7. Procédé selon au moins une des revendications qui précèdent, caractérisé en ce que la réaction est exécutée en continu.

**8.** Procédé selon au moins une des revendications qui précèdent, caractérisé en ce que, avant ou après la polymérisation, on ajoute une base.

**9.** Procédé selon au moins une des revendications qui précèdent, caractérisé en ce que le solvant utilisé est l'eau.